(19)

Europäisches
Patentamt
European
Patent Office
Office européen
des brevets

(11)  **EP 4 472 091 A1**

(12)  # EUROPEAN PATENT APPLICATION

(43) Date of publication:
**04.12.2024  Bulletin 2024/49**

(21) Application number: **24171565.5**

(22) Date of filing: **22.04.2024**

(51) International Patent Classification (IPC):
**H04B 7/024** (2017.01)   **H04B 17/345** (2015.01)
**H04B 7/06** (2006.01)   **H04B 7/08** (2006.01)

(52) Cooperative Patent Classification (CPC):
**H04B 7/024; H04B 7/0626; H04B 7/0696;
H04B 7/0857; H04B 17/345**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **19.05.2023  IN 202341035131**

(71) Applicant: **Nokia Technologies Oy
02610 Espoo (FI)**

(72) Inventors:
• **BELLUR, Vinayak
  Bangalore (IN)**
• **ROM, Christian
  Aalborg (DK)**
• **CAUDURO DIAS DE PAIVA, Rafael
  Aalborg (DK)**

(74) Representative: **Script Intellectual Property LLP
Suite J, Anchor House
School Close
Chandlers Ford
Eastleigh, Hampshire SO53 4DY (GB)**

(54)  **DEMODULATION DIFFERENTIATED SINR REPORTING FOR MTRP GROUP  BASED MEASUREMENT REPORTING**

(57)    A method including determining a first reference signal received power and a first signal to interference and noise ratio at a user equipment in relation to a first transmission reception point; determining a second reference signal received power and a second signal to interference and noise ratio at the user equipment in relation to a second transmission reception point, where the first and second transmission reception points are spaced from each other; transmitting a signal from the user equipment, where the signal comprises information in regard to the reference signal received powers and the signal to interference and noise ratios for the first and second transmission reception points.

| determining a first reference signal received power and a first signal to interference and noise ratio at a user equipment in relation to a first transmission reception point | 702 |

| determining a second reference signal received power and a second signal to interference and noise ratio at the user equipment in relation to a second transmission reception point, where the first and second transmission reception points are spaced from each other | 704 |

| transmitting a signal from the user equipment, where the signal comprises information in regard to the reference signal received powers and the signal to interference and noise ratios for the first and second transmission reception points | 706 |

FIG. 7

**Description**

TECHNICAL FIELD

The example and non-limiting embodiments relate generally to beam management and scheduling and, more particularly, to signal to interference and noise ratio determining and reporting.

BRIEF DESCRIPTION OF PRIOR DEVELOPMENTS

Use of multiple transmission reception points with a user equipment is known. Reporting of information for reference signal received power regarding multiple transmission reception points is also known.

SUMMARY OF THE INVENTION

The following summary is merely intended to be an example. The summary is not intended to limit the scope of the claims.

In accordance with one aspect, an example method comprises: determining a first reference signal received power and a first signal to interference and noise ratio at a user equipment in relation to a first transmission reception point; determining a second reference signal received power and a second signal to interference and noise ratio at the user equipment in relation to a second transmission reception point, where the first and second transmission reception points are spaced from each other; and transmitting a signal from the user equipment, where the signal comprises information in regard to the reference signal received powers and the signal to interference and noise ratios for the first and second transmission reception points.

In accordance with another aspect, an example apparatus comprises: at least one processor; and at least one non-transitory memory storing instructions that, when executed with the at least one processor, cause the apparatus to perform: determining a first reference signal received power and a first signal to interference and noise ratio at the apparatus in relation to a first transmission reception point; determining a second reference signal received power and a second signal to interference and noise ratio at the apparatus in relation to a second transmission reception point, where the first and second transmission reception points are spaced from each other; transmitting a signal from the apparatus, where the signal comprises information in regard to the reference signal received powers and the signal to interference and noise ratios for the first and second transmission reception points.

In accordance with one aspect, an example apparatus comprises: means for determining a first reference signal received power and a first signal to interference and noise ratio at the apparatus in relation to a first transmission reception point; means for determining a second reference signal received power and a second signal to interference and noise ratio at the apparatus in relation to a second transmission reception point, where the first and second transmission reception points are spaced from each other; means for transmitting a signal from the apparatus, where the signal comprises information in regard to the reference signal received powers and the signal to interference and noise ratios for the first and second transmission reception points.

In accordance with one aspect, an example is provided with a non-transitory program storage device readable by an apparatus, tangibly embodying a program of instructions executable with the apparatus for performing operations, the operations comprising: determining a first reference signal received power and a first signal to interference and noise ratio at a user equipment in relation to a first transmission reception point; determining a second reference signal received power and a second signal to interference and noise ratio at the user equipment in relation to a second transmission reception point, where the first and second transmission reception points are spaced from each other; and transmitting a signal from the user equipment, where the signal comprises information in regard to the reference signal received powers and the signal to interference and noise ratios for the first and second transmission reception points.

In accordance with one aspect, an example method comprises: determining a signal, where the signal comprises an identification of at least two modes for a user equipment to be able to use to perform a signal to interference and noise ratio determination; and transmitting the signal to the user equipment.

In accordance with one aspect, an example apparatus comprises: at least one processor; and at least one non-transitory memory storing instructions that, when executed with the at least one processor, cause the apparatus to perform: determining a signal, where the signal comprises an identification of at least two modes for a user equipment to use to perform a signal to interference and noise ratio determination; and transmitting the signal to the user equipment.

In accordance with one aspect, an example apparatus comprises: means for determining a signal, where the signal comprises an identification of at least two modes for a user equipment to use to perform a signal to interference and noise ratio determination; and means for transmitting the signal to the user equipment.

In accordance with one aspect, an example a non-transitory program storage device readable by an apparatus is provided, tangibly embodying a program of instructions executable with the apparatus for performing operations, the operations comprising: determining a signal, where the signal comprises an identification of at least two modes for a user equipment to use to perform a signal to interference and noise ratio determination; and transmitting the signal to the user equipment.

In accordance with one aspect, an example method comprises: receiving a signal from a user equipment, where the signal comprises an indication of a mode used to determine signal to interference and noise ratios for multiple transmission reception points; and using the indication to at least partially determine beam management and scheduling decisions for subsequent simultaneous reception at the user equipment.

In accordance with one aspect, an example apparatus comprises: at least one processor; and at least one non-transitory memory storing instructions that, when executed with the at least one processor, cause the apparatus to perform: receiving a signal from a user equipment, where the signal comprises an indication of a mode used to determine signal to interference and noise ratios for multiple transmission reception points; and using the indication to at least partially determine beam management and scheduling decisions for subsequent simultaneous reception at the user equipment.

In accordance with one aspect, an example apparatus comprises: means for receiving a signal from a user equipment, where the signal comprises an indication of a mode used to determine signal to interference and noise ratios for multiple transmission reception points; and means for using the indication to at least partially determine beam management and scheduling decisions for subsequent simultaneous reception at the user equipment.

In accordance with one aspect, an example a non-transitory program storage device readable by an apparatus is provided, tangibly embodying a program of instructions executable with the apparatus for performing operations, the operations comprising: receiving a signal from a user equipment, where the signal comprises an indication of a mode used to determine signal to interference and noise ratios for multiple transmission reception points; and using the indication to at least partially determine beam management and scheduling decisions for subsequent simultaneous reception at the user equipment.

According to some aspects, there is provided the subject matter of the independent claims. Some further aspects are provided in subject matter of the dependent claims.

BRIEF DESCRIPTION OF DRAWINGS

The foregoing aspects and other features are explained in the following description, taken in connection with the accompanying drawings, wherein:

FIG. 1 is a block diagram of one possible and non-limiting example system in which the example embodiments may be practiced;

FIG. 2 is a diagram illustrating an example of signals received at a Rx Chain 1 with inter-TRP interference of TRP2 onto TRP1 signal;

FIG. 3 is a diagram illustrating an example of signals received at a Rx Chain 2 with inter-TRP interference of TRP1 onto TRP2 signal;

FIG. 4 is a diagram illustrating Multi-Rx, Multi-panel FR2 UE with a multi-TRP scenario for groupBasedBeamReporting;

FIG. 5 is a signaling diagram illustrating one example method;

FIG. 6 is a signaling diagram illustrating one example method;

FIG. 7 is a diagram illustrating one example method;

FIG. 8 is a diagram illustrating one example method;

FIG. 9 is a diagram illustrating one example method.

DETAILED DESCRIPTION

The following abbreviations that may be found in the specification and/or the drawing figures are defined as follows:

| | |
|---|---|
| 3GPP | third generation partnership project |
| 5G | fifth generation |
| 5GC | 5G core network |
| AMF | access and mobility management function |
| CMR | channel measurement resource |
| CP | cyclic prefix |
| CRI | CSI-RS resource index |
| CSI | channel state information |
| CU | central unit |
| DCI | downlink control information |
| DU | distributed unit |
| eNB (or eNodeB) | evolved Node B (e.g., an LTE base station) |
| EN-DC | E-UTRA-NR dual connectivity |
| en-gNB or En-gNB | node providing NR user plane and control plane protocol terminations towards the UE, and acting as secondary node in EN-DC |
| eMBB | enhanced mobile broadband |
| E-UTRA | evolved universal terrestrial radio access, i.e., the LTE radio access technology |
| FFS | for further study |
| FR2 | frequency range 2 (for bands within 24250 MHz - 71000 MHz) |
| GBBR | group-based beam reporting |
| gNB (or gNodeB) | base station for 5G/NR, i.e., a node providing NR user plane and control plane protocol terminations towards the UE, and connected via the NG interface to the 5GC |
| I/F | interface |
| KPI | key performance indicator |
| L1 | layer 1 |
| LTE l | long term evolution |
| MAC | medium access control |
| mDCI | multi-DCI |
| MIMO | multiple input multiple output |
| MME | mobility management entity |
| MRTD | maximum receive time difference |
| mTRP | multiple TRP |
| ng or NG | new generation |
| ng-eNB or NG-eNB | new generation eNB |
| NR | new radio |
| N/W or NW | network |
| PDCP | packet data convergence protocol |
| PHY | physical layer |
| QCL | quasi co location |
| RAN | radio access network |
| Rel | release |
| Rel-17 | release 17 |
| RLC | radio link control |
| RRC | radio resource control |
| RRH | remote radio head |
| RRM | radio resource management |
| RS | reference signal (for channel measurements or interference measurements) |
| RSRP | reference signal received power |
| RTD | receive time difference |
| RU | radio unit |
| Rx | receiver |
| SDAP | service data adaptation protocol |
| sDCI | single DCI |
| SGW | serving gateway |
| SINR | signal to interference and noise ratio |
| SIR | signal to interference ratio |
| SMF | session management function |
| SSB | system synchronization block |

| SSB-RI | SSB resource index |
| TCI | transmission configuration indicator |
| TRP | transmission reception point |
| TS | technical specification |
| Tx | transmitter |
| UE | user equipment (e.g., a wireless, typically mobile device) |
| UPF | user plane function |
| WI | work item |

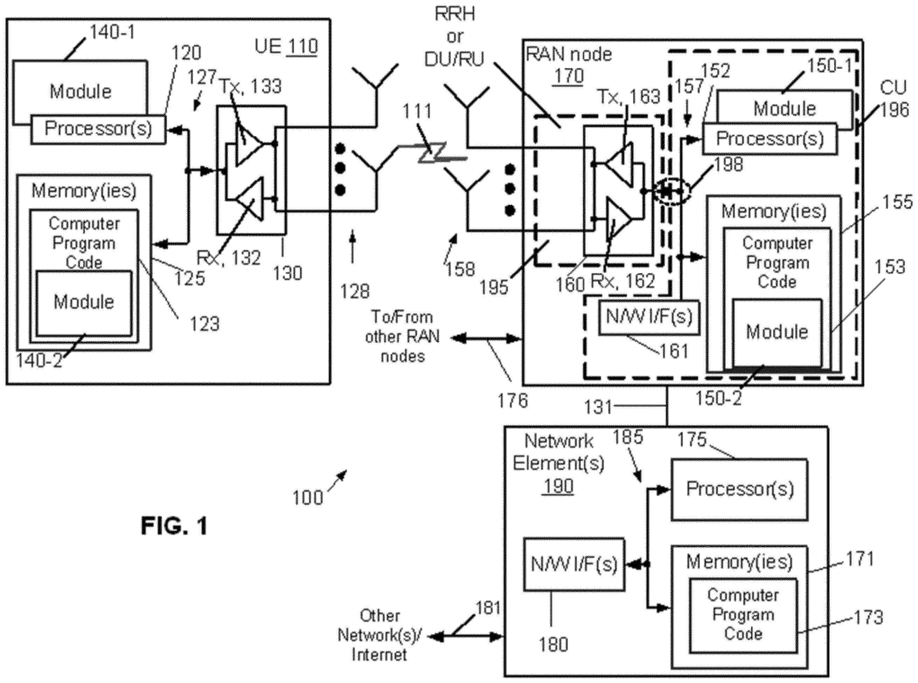

Turning to FIG. 1, this figure shows a block diagram of one possible and non-limiting example in which the examples may be practiced. A user equipment (UE) 110, radio access network (RAN) node 170, and network element(s) 190 are illustrated. Examples of network equipment, network device, or a network entity might be understood to include, at least part of, a transmission reception point or a cell or a gNB or node for example. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(S)) and/or user plane functions (UPF(s)) and/or session management function(s) (SMF(s)). Such core network functionality for LTE may include MME (Mobility Management Entity)/SGW (Serving Gateway) functionality. These are merely exemplary functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Features as described herein may be used with reference to signal to interference and noise ratio (SINR) reporting. Features as described herein may be used in regard to how a network may distinguish between transmission reception point (TRP) beam groups with 1. SINR reporting that includes inter-TRP interference versus 2. SINR reporting that excludes inter-TRP interference. Features as described herein may also be used in regard to how a UE estimates and reports signal to interference and noise ratio (SINR). SINR is typically considered to be an "estimate" in baseband terms. However, it may be "computed" in so far as a mathematical operation may be performed.

Rel-17 Group Based Beam Reporting framework does not have a provision to report the SINR for beam pairs associated with multiple TRPs (mTRP). It only specifies L1-RSRP (reference signal received power) measurement and reporting for beam pairs belonging to different channel measurement resource (CMR) sets associated with different TRPs. In practical conditions an FR2 multi-Rx UE receiving data from multiple TRPs will experience time varying interference from undesired TRP signals to the desired TRP signals at each Rx chain. This SINR plays a major role in degradation of receiver performance. The received signal strength (L1-RSRP) report of the beam pairs alone will not be sufficient to represent the interference conditions faced by the LTE across the beam pairs. Conventionally, there is no distinction if the SINR includes the inter-TRP interference or not. This distinction may be important for the network to differentiate its beam pair selection for UEs with a receiver supporting joint demodulation, and for UEs not supporting joint demodulation, as the beam pair selection would vary significantly. Features as described herein may be used for a network to distinguish between mTRP beam groups with SINR reporting that includes inter-TRP interference versus SINR reporting that excludes inter-TRP interference.

Features as described herein may be used in regard to dynamic link adaptation in a 5GNRFR2 multi-TRP network. This may be used in regard to 5GNRFR2 UEs/devices which have multi-Rx chains, and multi-panel reception capabilities. This follows justifications of the WID RP-221753, "Requirement for NR FR2 multi-Rx chain DL reception" indicated below:

The existing Rel-15 NR FR2 minimum UE requirements are defined with an assumption that UE is equipped with a single antenna panel and capable to perform DL reception using a single RX beam/chain reception. Furthermore, the UE performance requirements are limited for DL MIMO rank 1 and 2. In FR2, 4-layer MIMO reception requires beam reception from at least two directions. Although this is supported by the MIMO features since Rel-15, no performance requirements have yet been specified. This is important for high-rate MIMO in FR2, as well as for FR2 HST scenarios.

During Rel-16 and Rel-17, the support of NR FR2 CA with IBM (Independent Beam Management) and CBM (Common Beam Management) with simultaneous DL reception on different component carriers from the co-located and non-col-located TRPs was defined. The IBM concept implies a UE is capable of DL simultaneous reception on different UE panels/chains using separate beams on different component carriers and requires improved UE baseband and RF capabilities (multiple baseband chains and support of multiple antenna panels).

Several enhancements to enable efficient and robust DL multi-TRP/panel operation were introduced in the Rel-16 NR eMIMO WI. For instance, DL transmission schemes with simultaneous and non-simultaneous multi-beam reception from multiple TRPs/panels were introduced. The simultaneous reception may require support of simultaneous multi-panel operation with several independent RX beams/chains at the UE side. As part of this item, a new FR2 UE capability for simultaneous multi-beam reception was introduced (simultaneousReceptionDiffTypeD-r16). However, no RF, RRM or performance requirements were defined in Rel-16 and Rel-17 for FR2 UEs with simultaneousReceptionDiffTypeD-r16 capability.

Enhanced NR FR2 UEs with multi-beam simultaneous reception and multiple RX chains can provide a meaningful performance improvement in FR2 improving both demodulation performance (4-layer DL MIMO), RRM performance and improve RF spherical coverage. This work item aims to introduce the requirements for UEs capable of multi-beam/chain simultaneous DL reception on a single component carrier to achieve improved RF, RRM and UE demodulation performance.

Different implementation scenarios could be considered at the UE. Single-TCI reception on different beams has been supported by the RAN1 specifications since Rel-15 via the Type I codebook, which could be achieved at the UE with either a single panel or multiple panels. Alternatively, dual TCI operation can be combined with the Rel-17 mTRP framework even if the base station is actually deployed as a single TRP.

This WI therefore provides the requirements for both single and dual TCI assumptions to specify requirements for reception of 4-layer downlink MIMO with simultaneous reception at the UE from two different directions.

Based upon the Justifications in WID RP-221753 above, it has been determined that:

- In FR2, **4-layer MIMO reception requires beam reception from at least two directions.** Although this is supported by the MIMO features since Rel-15, no performance requirements have yet been specified.

- The simultaneous reception may require support of **simultaneous multi-panel operation with several independent RX beams/chains at the UE side.**

- As part of this item, a new FR2 UE capability for simultaneous multi-beam reception was introduced (**simultaneousReceptionDiffTypeD-r16**) as specified in TS 38.213.

UE capability information: Phy-ParametersFRX-Diff: = SEQUENCE { ... simultaneousReceptionDiffTypeD-r16 ENUMERATED {supported}

Also the Objective of WID in RP-221753, "Requirement for NR FR2 multi-Rx chain DL reception" indicated:

- Introduce necessary requirement(s) for enhanced FR2-1 UEs with simultaneous DL reception with two different QCL TypeD RSs on single component carrier with up to 4 layer DL MIMO

  - Enhanced RF requirements:

    - Specify RF requirements, mainly spherical coverage requirements, for devices with simultaneous reception from different directions with different QCL TypeD RSs

    - The legacy spherical coverage requirement for reception from a single direction will be kept

    - PC3 will be prioritized, other power classes should be considered after the PC3 requirements framework is finalized

- Introduce necessary requirement(s) for enhanced FR2-1 UEs with simultaneous DL reception from different directions with different QCL TypeD RSs on a single component carrier

  - Enhanced RRM requirements:

    - The following requirements should be studied and specified if necessary:

      - L1-RSRP measurement delay

      - L3 measurement delay (both cell detection delay and measurement period can be considered)

        » The starting point is the enhancements related to L1-RSRP measurement enhancements

      - RLM and BFD/CBD requirements

      - Scheduling/measurement restrictions

      - TCI state switching delay with dual TCI

      - Receive timing difference between different directions (different QCL Type D RSs)

    NOTE:

      ● The case of single TCI is handled as a second priority. Additional aspects related to single TCI can be further revisited.

From the Objective above, it has been determined that the following may be desirable:

- Introduce necessary requirement(s) for enhanced FR2 UEs with simultaneous DL reception with two different QCL TypeD RSs on single component carrier with up to 4-layer DL MIMO
- Introduce necessary requirement(s) for enhanced FR2 UEs with simultaneous DL reception from different directions with different QCL TypeD RSs on a single component carrier

Also from the review of the Objective of enhanced RRM requirements part of the WI, it has been determined the following requirements may also be studied and specified necessary:

- L1-RSRP measurement delay

- L3 measurement delay (both cell detection delay and measurement period can be considered)

- RLM and BFD/CBD requirements

- TCI state switching delay with dual TCI

- Receive timing difference between different directions

From the 3GPP TSG -RAN4 WG4 meeting #106, WF on NR FR2 multi-Rx chain DL reception RRM requirements (part 1):

### Issue 1-2-7: Necessity of group-based beam reporting for simultaneous reception

- Rel-17 group-based reporting is used as a prerequisite to define requirement for simultaneous reception

  - Note: Simultaneous reception term above includes Data/Data, RS/RS and Data/RS simultaneous reception cases.

and from 3GPP TSG-RAN4 WG4 meeting #106-bis-e WF on NR FR2 multi-Rx chain DL reception RRM requirements (part 2) R4- 2306319
L1-SINR for simultaneous reception
**Issue 1-5-1: Shall L1-SINR requirements be defined for the multi-RX UE**
*FFS whether enhancements to L1-SINR are supported in this WI.*

According to TR 38.802, NR shall support downlink transmission of the same Physical Downlink Shared Channel (PDSCH) data stream(s) from multiple TRPs at least with ideal backhaul, and different PDSCH data streams from multiple TRPs with both ideal and non-ideal backhaul. A multi-Rx FR2 UE capable of simultaneous reception combines signals from multiple TRPs, maximizes received power, and enhances reliability. In scenarios where multiple TRPs are serving a UE, the choice of which TRP beam pairs should be used to simultaneously transmit to the UE is very important. In eMBB, the choice of TRP beam pairs impacts the throughput KPI. It is important that the choice of a pair of beams is done in an optimal way to minimize interference, and to improve the overall link budget. To facilitate selection of suitable beam pairs 3GPP Release 15, Release 16 and Release 17 define a framework for group-based beam reporting. In Rel-17 there were enhancements to group-based Beam Reporting where UE (capable of simultaneous DL data reception from different QCL-D sources) the UE will be configured with at least two different sets of L1 measurement resources that are associated with two different active TRPs. The UE then measures the L1-RSRP from the reference signals related to the two sets, constituting beam pairs, and reports the measurements in a single reporting instance. The reporting includes one or more different groups of reference signals, where the reporting of a group indicates that the UE can receive simultaneously from TCI states related to that group. More than two (2) beam pairs can be configured to the UE and their measurements can be reported to the network.

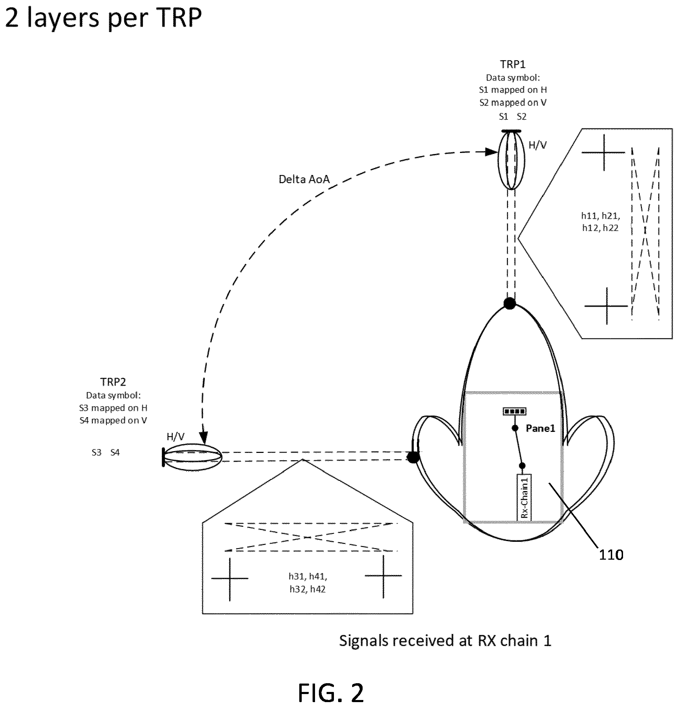

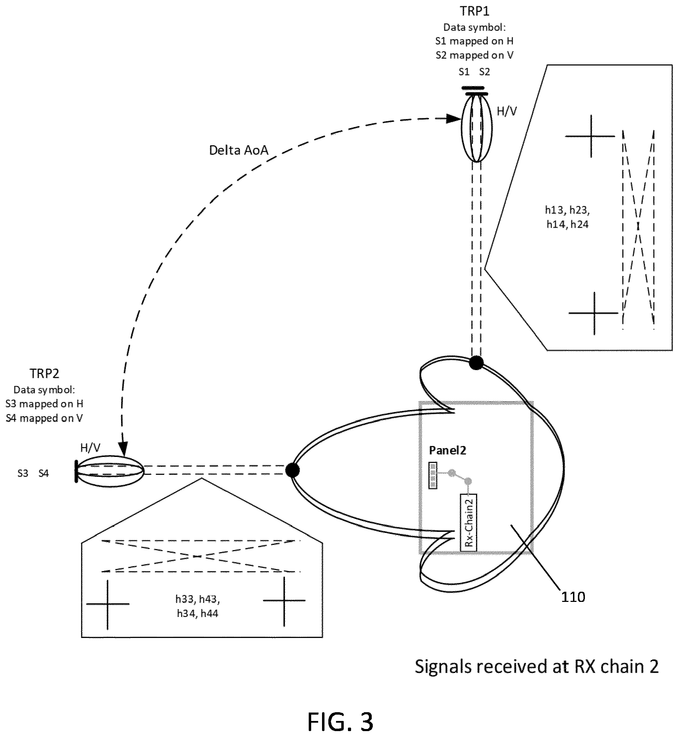

FIGS. 2 and 3 illustrate the problem of inter-TRP interference in a multi-Rx UE that is simultaneously receiving from two TRPs. The UE is scheduled for 4-layer reception with 2 layers scheduled from TRP1, and 2 layers scheduled from TRP2. The signal model at UE can be described as:

$$\mathbf{r} = \mathbf{H}.\mathit{s} + \mathbf{w}$$

Where the Channel Matrix H of dimensions 4x4:

$$\mathbf{H} = \begin{bmatrix} h_{11} & h_{12} & h_{13} & h_{14} \\ h_{21} & h_{22} & h_{11} & h_{24} \\ h_{31} & h_{32} & h_{33} & h_{34} \\ h_{41} & h_{42} & h_{43} & h_{44} \end{bmatrix} = \begin{bmatrix} \mathbf{H}_1 & \mathbf{H}_2 \\ \mathbf{H}_3 & \mathbf{H}_4 \end{bmatrix}$$

The channel matrices for each Tx-Rx pair are:

- $\mathbf{H}_1 = \begin{bmatrix} h_{11} & h_{12} \\ h_{21} & h_{22} \end{bmatrix}$, the channel of TRP1 to Rx1 (modeled for intended signal for Rx1)

- $\mathbf{H}_2 = \begin{bmatrix} h_{13} & h_{14} \\ h_{11} & h_{24} \end{bmatrix}$, the channel of TRP2 to Rx1 (modeled for interfering signal for Rx1)

- $\mathbf{H}_3 = \begin{bmatrix} h_{31} & h_{32} \\ h_{41} & h_{42} \end{bmatrix}$, the channel of TRP1 to Rx2 (modeled for interfering signal for Rx2)

- $\mathbf{H}_4 = \begin{bmatrix} h_{33} & h_{34} \\ h_{43} & h_{44} \end{bmatrix}$, the channel of TRP2 to RX2 (modeled for intended signal for RX2)

The individual elements of the H matrix are depicted in FIGs. 2 and 3.

In this work item, two type of MMSE baseband receivers are considered:

- joint demodulation addressing the full H matrix of dimensions 4x4 (in the 4-layer case), and

- separated demodulation addressing the $\mathbf{H}_1$ and $\mathbf{H}_3$ matrices.

In the case of **separate demodulation,** the signals addressed by $\mathbf{H}_2$ and $\mathbf{H}_4$ are considered as pure interference as they are not used in the respective per Rx chain demodulation receiver process. Thus, in this case the signals from each TRP are interfering each other and main source of separation consists of the spatial filter at each UE panel.

In the case of **joint demodulation,** the signals from each TRP are used in the demodulation process considering the full H matrix and thus the signals addressed by $\mathbf{H}_2$ and $\mathbf{H}_4$ are not considered as interference.

For group-based beam reports, the configured measurement quantity in CSI-Report Config Information element is L1-RSRP. It has been determined that there is a need to enhance group-based beam reporting for DL multi-TRP and/or multi-panel UE reception to include an assessment of the dynamic per TRP interference, while differentiating how much of the interference is contributed by the inter-TRP interference due to the following:

1. Merely relying on L1-RSRP values for selecting the best beam pairs will not be adequate or accurate as the best beam pair selection should be the one leading to the highest throughput and thus highest SINR.

2. When a UE is only capable of **separate demodulation** per RX chain, it will highly benefit from the beam pair selection minimizing the Inter-TRP interference as the receiver cannot cancel it in baseband and solely relies on spatial beam separation via best beam selection. However, when a UE is capable of **joint demodulation** the network could make much better selection of beam pairs by ignoring the Inter-TRP interference in the beam selection as the baseband receiver would be able to cancel this Inter-TRP interference. Thus, a differentiated SINR reporting may be provided.

While processing DL signals from the two TRPs, SINR is measured in the baseband Rx to determine a total interference including the one from different TRPs while factoring path loss and antenna gain.

$$SINR = \frac{\hat{P}_s}{\hat{P}_i + \hat{P}_n}$$

$\hat{P}_s$ = Estimated Signal Power
$\hat{P}_i$ = Estimated Interference Power

$\hat{P}_n$ = *Noise Power in Rx bandwidth*

In an example scenario of a 4-layer DL-MIMO reception from 2 TRPs, if the multi-Rx UE has a joint detection and demodulation receiver, then it can compute the SINR ratio of interference from undesired TRP at each Rx chain. The reporting from the UE to the network of an adequate interference power is an important component for beam management. If group-based beam reporting framework of Rel-17 is enhanced to reporting an adequate L1-SINR, in addition to the L1-RSRP, then in mTRP scenarios, there can be a very significant improvement in beam management and scheduling decisions at network.

Rel-17 Group-Based Beam Reporting selects best beam pair from configured CMR sets based on L1-RSRP measurements only. 3GPP TS 38.214 section 5.2.1.4 mentions the following about Rel-17 group-Based Beam reporting:

For aperiodic CSI, and for periodic and semi-persistent CSI resource settings, if *groupBasedBeamReporting-r17* is configured, each trigger state configured using the higher layer parameter *CSI-AperiodicTriggerState* is associated with one or multiple *CSI-ReportConfig* where each *CSI-ReportConfig* is linked to periodic or semi-persistent, setting(s):

- When one Resource Setting is configured, the Resource setting is given by *resourcesForChannelMeasurement* for L1-RSRP measurement. In such a case, the number of configured CSI Resource Sets in the Resource Setting is S=2

For aperiodic CSI, and for aperiodic CSI resource settings, if *groupBasedBeamReporting-r17* is configured, each trigger state configured using the higher layer parameter *CSI-AperiodicTriggerState* is associated with *resourcesForChannel* and *resourcesForChannel2*, which correspond to first and second resource sets, respectively, for L1-RSRP measurement.

Further, regarding the CSI reporting quantity configurations, 3GPP TS 38.214 section 5.2.1.4.2 mentions the following:

If the UE is configured with a *CSI-ReportConfig* with the higher layer parameter *reportQuantity* set to 'cri-RSRP', 'ssb-Index-RSRP', 'cri-RSRP-Capability [Set]Index' or 'ssb-Index-RSRP-Capability[Set]Index',

- if the UE is configured with the higher layer parameter *groupBasedBeamReporting* set to 'disabled', the UE is not required to update measurements for more than 64 CSI-RS and/or SSB resources, and the UE shall report in a single report *nrofReportedRS* (higher layer configured) different CRI or SSBRI for each report setting.

- if the UE is configured with the higher layer parameter *groupBasedBeamReporting* set to 'enabled', the UE is not required to update measurements for more than 64 CSI-RS and/or SSB resources, and the UE shall report in a single reporting instance two different CRI or SSBRI for each report setting, where CSI-RS and/or SSB resources can be received simultaneously by the UE either with a single spatial domain receive filter, or with multiple simultaneous spatial domain receive filters.

- if the UE is configured with the higher layer parameter *groupBasedBeamReporting-r17*, the UE is not required to update measurements for more than 64 CSI-RS and/or SSB resources, and the UE shall report in a single reporting instance *nrofReportedRSgroup*, if configured, group(s) of two CRIs or SSBRIs selecting one CSI-RS or SSB from each of the two CSI Resource Sets for the report setting, where CSI-RS and/or SSB resources of each group can be received simultaneously by the UE.

3GPP 38.214 section 5.2.1.4 mentions the following about L1-SINR reporting.

If the UE is configured with a *CSI-ReportConfig* with the higher layer parameter *reportQuantity* set to 'cri-SINR', 'ssb-Index-SINR', 'cri-SINR-Capability[Set]Index' or 'ssb-Index-SINR-Capability[Set]Index',

- if the UE is configured with the higher layer parameter *groupBasedBeamReporting* set to 'disabled', the UE shall report in a single report *nrofReportedRS* (higher layer configured) different CRI or SSBRI for each report setting.

- if the UE is configured with the higher layer parameter *groupBasedBeamReporting* set to 'enabled', the UE shall report in a single reporting instance two different CRI or SSBRI for each report setting, where CSI-RS and/or SSB resources can be received simultaneously by the UE.

For L1-SINR computation, for channel measurement the UE may be configured with NZP CSI-RS resources and/or SS/PBCH Block resources, for interference measurement the UE may be configured with NZP CSI-RS or CSI-IM resources.

For L1-SINR reporting, if the higher layer parameter *nrofReportedRS* in CSI-*ReportConfig* is configured to be one, the reported L1-SINR value is defined by a 7-bit value in the range [-23, 40] dB with 0.5 dB step size, and if the higher layer parameter *nrofReportedRS* is configured to be larger than one, or if the higher layer parameter *group-BasedBeamReporting* is configured as 'enabled', the UE shall use differential L1-SINR based reporting, where the largest measured value of L1-SINR is quantized to a 7-bit value in the range [-23, 40] dB with 0.5 dB step size, and the differential L1-SINR is quantized to a 4-bit value. The differential L1-SINR is computed with 1 dB step size with a reference to the largest measured L1-SINR value which is part of the same L1-SINR reporting instance. When NZP CSI-RS is configured for channel measurement and/or interference measurement, the reported L1-SINR values should not be compensated by the power offset(s) given by higher layer parameter *powerControOffsetSS* or *powerControlOffset*.

When one or two resource settings are configured for L1-SINR measurement

- If the higher layer parameter *timeRestrictionForInterferenceMeasurements* in *CSI-ReportConfig* is set to *'notConfigured'*, the UE shall derive the interference measurements for computing L1-SINR reported in uplink slot n based on only the CSI-IM or NZP CSI-RS for interference measurement (defined in [4, TS 38.211]) or NZP CSI-RS for channel and interference measurement no later than the CSI reference resource associated with the CSI resource setting.

- If the higher layer parameter *timeRestrictionForInterferenceMeasurements* in *CSI-ReportConfig* is set to *'configured'*, the UE shall derive the interference measurements for computing the L1-SINR reported in uplink slot n based on the most recent, no later than the CSI reference resource, occasion of CSI-IM or NZP CSI-RS for interference measurement (defined in [4, TS 38.211]) or NZP CSI-RS for channel and interference measurement associated with the CSI resource setting.

When the UE is configured a *CSI-ReportConfig* with the higher layer parameter *reportQuantity* set to ' cri-SINR-Capability[Set]Index' or 'ssb-Index-SINR-Capability[Set]Index' an index of UE capability value, indicating the maximum supported number of SRS antenna ports, is reported along with the pair of SSBRI/CRI and L1-SINR.

With reference to above details, the following UE capabilities are defined: groupBeamReporting, groupSINR-reporting-r16 and mTRP-GroupBasedL1-RSRP-r17. From 3GPP TS 38.306 v17.0, Rel-17, the definitions are as below:

| Definitions of Parameters | Per | M | FDD-TDD Diff | FR1-FR2 DIFF |
|---|---|---|---|---|
| *groupBeamReporting*<br>Indicates whether UE supports RSRP reporting for the group of two reference signals. | **Band** | **No** | **N/A** | **N/A** |
| *groupSINR-reporting-r16*<br>Indicates whether UE supports group based L1-SINR reporting. UE indicates support of this feature shall indicate support of *ssb-csirs-SINR-measurement-r16.* | **Band** | **No** | **N/A** | **N/A** |
| *mTRP-GroupBasedL1-RSRP-r17*<br>Indicates the support of group based L1-RSRP reporting enhancements.<br>This feature also includes following parameters:<br>- *maxNumBeamGroups-r17* indicates the maximum number N of beam groups (M=2 beams per beam group) in a single L1-RSRP reporting instance based on measurement on two CMR resource sets.<br>- *maxNumRS-WithinSlot-r17* indicates the maximum number of SSB and CSI-RS resources for measurement in both CMR sets within a slot across all CCs. | **Band** | **No** | **N/A** | **N/A** |

(continued)

| Definitions of Parameters | Per | M | FDD-TDD Diff | FR1-FR2 DIFF |
|---|---|---|---|---|
| - *maxNumRS-AcrossSlot-r17* indicates the maximum number of configured SSB and CSI-RS resources for measurement in both CMR sets across all CCs. *maxNumRS-WithinSlot-r17* and *maxNumRS-AcrossSlot-r17* are also counted in *maxTotalResourcesForOneFreqRange-r16* and *maxTotalResourcesForAcrossFreqRanges-r16.* | | | | |

In Rel-15, the L1-RSRP group-based report is supported. If the UE reports capability of groupBeamReporting and the Network enables *groupBasedBeamReporting* via higher layer configuration, then the UE can report L1-RSRPs for a pair of SSBRI or CRI.

In Rel-16, additionally, L1-SINR group-based reporting is supported. If the UE reports an additional capability of *groupSINR-reporting-r16* the Network enables *groupBasedBeamReporting* via higher layer configuration, then the UE can report L1-SINR for a pair of SSBRI or CRI.

In Rel-17, further enhancements on L1-RSRP group-based report are introduced. If the UE reports additional capability of *mTRP-GroupBasedL1-RSRP-r17,* then network can configure two CMR sets (or CSI-RS resource set) to the UE. Each CMR set is associated with a TRP. The number of SSBRI or CRI pairs reported by UE is extended from one to *nrofReportedRSgroup.* This enhancement has not been extended to report L1-SINR report for the beam pair groups.

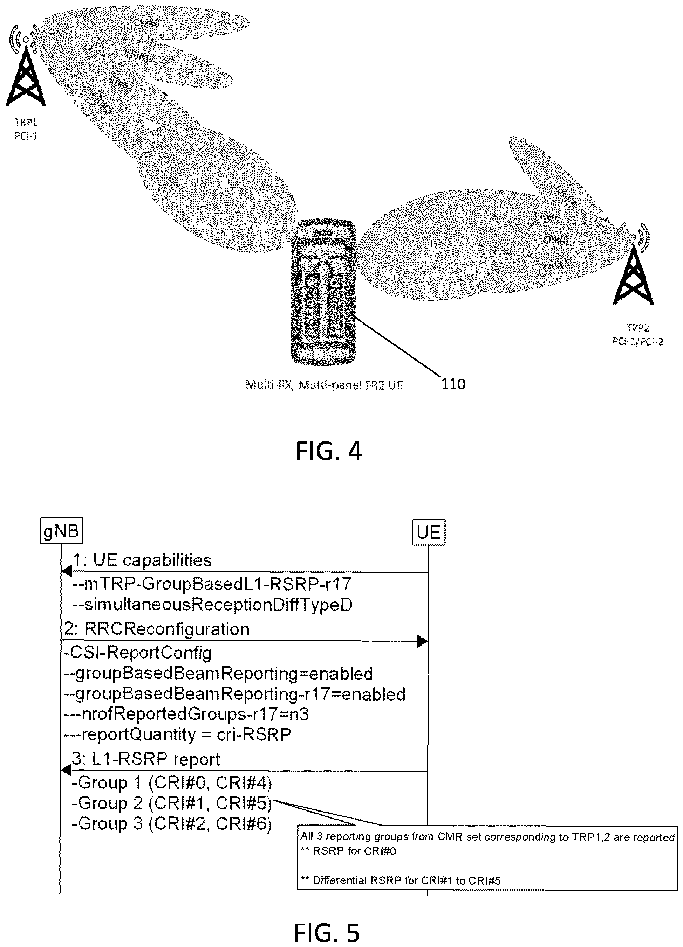

FIG. 4 illustrates a possible scenario and configuration setting for groupBasedBeamReporting in Rel-17 framework. If groupBasedBeamReporting is configured for multi-TRP, the CSI Resource Set Configuration will comprise of reference signal (RS) resources that can be received simultaneously from two different spatial directions/different QCL-D sources. Furthermore, the network enables groupBasedBeamReporting to UEs capable of *mTRP-GroupBasedL1-RSRP-r17,* while configuring CSI-RS/SSB resource sets to be measured from both TRPs. CSI-ReportConfig associates a CSI-RS or SSB-RS resource set for purpose of channel measurement. The CSI-ReportConfig has:

- a parameter *groupBasedBeamReporting*

- a parameter *groupBasedBeamReporting-r17* (enabling GBBR for mTRP)

- a parameter *reportQuantity* for configuring contents of CSI-ReportConfig.

- It can be cri-RSRP if the CMR sets have CSI-RS resources.

- It can be ssb-Index-RSRP if the CMR sets have SSB resources configured.

- a parameter *nrOfReportedRSGroup-r17* that configures the number of beam pairs to be reported

In this example, network configures two channel measurement resource (CMR) sets in one resource setting meant for channel measurement. Each set has the same number of resources. CMR set 1 is associated with resources of TRP1, and CMR set 2 is associated with resources of TRP2. In order to illustrate the behavior of group-based beam reporting, one example is shown in FIG. 4, where the UE could be configured for groupBasedBeamReporting with two sets of reference signals related to TRP1 and TRP2, where TRP1 is sending CRI#0 to CRI#3, and TRP2 is sending CRI#4 to CRI#7. Reference signals considered for this example are CSI-RS and their respective resource IDs are indicated as CRI#<resource-ID>.

The steps involved Rel-17 group-based beam reporting are shown in FIG. 5 and include:

➢ In Step 1 the UE shares the capabilities to the gNB. The group-based reporting is optional with capability signaling indicated by *mTRP-GroupBasedL1-RSRP-r17.*

➢ In Step 2 the gNB configures the CSI-ReportConfig, which indicates that group-based beam reporting by enabling *groupBasedBeamReporting-r17* and configuring *nrofReportedGroups-r17.* In this example the number of reported groups is 3.

➢ In Step 3 the UE reports the L1-RSRP for the number of reported RS groups as configured in Step 2. This report includes first the list of CSI-RS or SSB resources in pairs which can be simultaneously received by the UE. In the second part of the report, the UE includes the differential RSRP values in relation to the RSRP of the first reported RS. In this example, the UE reported that it is capable of simultaneous reception from TCI states corresponding to the pairs of reference signals (CRI#0, CRI#4), (CRI#1, CRI#5), and (CRI#2, CRI#6), and the RSRP values are reported for all those six reference signals.

By using the procedure indicated in the steps above, the UE can indicate which are the DL beams that can be received simultaneously by the UE. With the information of the RS pairs in the group-based reporting, the gNB can activate and indicate the TCI states related to those groups for simultaneous reception by the UE.

Features as described herein may be used for enhancing the Rel-17 group-based beam reporting framework for mTRP to enable a better selection and reporting of the best downlink beam pair/group. An underlying assumption is that the UE is capable of simultaneously receiving DL signals from different TCI states QCL-D with reference signals from multiple TRPs, configured by the network in a channel measurement resource (CMR) set. This may be in regard to a UE receiving from two (2) TRPs simultaneously, and this is an example discussed below. The same could be extended in the case of UEs supporting a more than two TRPs for simultaneous receptions. The UE is multi-Rx capable and has Rx Chain 1 to process TRP1 signals and Rx Chain 2 to process TRP2 signals. Based on the capability in the UE receiver to perform advanced demodulation and detection, features may include:

1. Network configures the UE in **CSI-ReportConfig,**

   ◦ **groupBasedBeamReporting-v18** with SINR_Mode indicating usage of Method 1 (Mode 1) or Method 2 (Mode 2) for inter-TRP SINR estimation.

   ◦ **reportQuantity-v18** with cri-RSRP-SINR-Index or ssb-RSRP-SINR-Index for each CMR set associated with a TRP. This will indicate to the UE to report L1-RSRP and SINR (with or without inter-TRP interference) per TRP in reported beam pair in the same reporting instance.

      ▪ **Note:** groupBasedBeamReporting-v18 and reportQuantity-v18 may be replaced by other configuration with equivalent meaning or for different release version, e.g. v19, v20.

2. The UE will estimate SINR based on the method configured by the network in **groupBasedBeamReporting-v18,** where,

   A. **Method 1:** UE will estimate an SINR separately per Rx chain considering interference from all sources based on

      ▪ Differential/ratio of signal power of TRP1 on Rx Chain 1 to **interference power including the interference signal from TRP2** on Rx Chain 1
      **AND**

      ▪ Differential/ratio of signal power of TRP2 on Rx Chain 2 to **interference power including the interference signal of TRP1** on Rx Chain 2.

   B. **Method 2:** UE will estimate an SINR separately per Rx chain excluding inter-TRP interference as

      ▪ Differential/ratio of signal power of TRP1 on Rx Chain 1 to interference **power excluding the interference signal from TRP2** on Rx Chain 1.
      **AND**

      ▪ Differential/ratio of signal power of TRP2 on Rx Chain 2 **to interference power excluding the interference signal of TRP1** on Rx Chain 2.

3. The CSI-report for group-based beam reporting will contain new fields to include L1-SINR reporting along with the L1-RSRP reports in the same reporting instance.

• **SINR_Mode:**

- 0 to indicate separate SINR estimation per Rx chain and reporting **including** inter-TRP interference -> **Method 1 (Mode 1)**

- 1 to indicate separate SINR estimation per Rx chain and reporting **excluding** inter-TRP interference-> **Method 2 (Mode 2)**

- **SINR** - SINR estimate according to SINR_Mode for the beam with the strongest L1-RSRP. Data format of SINR same as for L1-RSRP.

- **Differential SINR** - Differential value of SINR estimate for other beams in the reported beam groups. Data format of Differential SINR same as data format of Differential L1-RSRP.

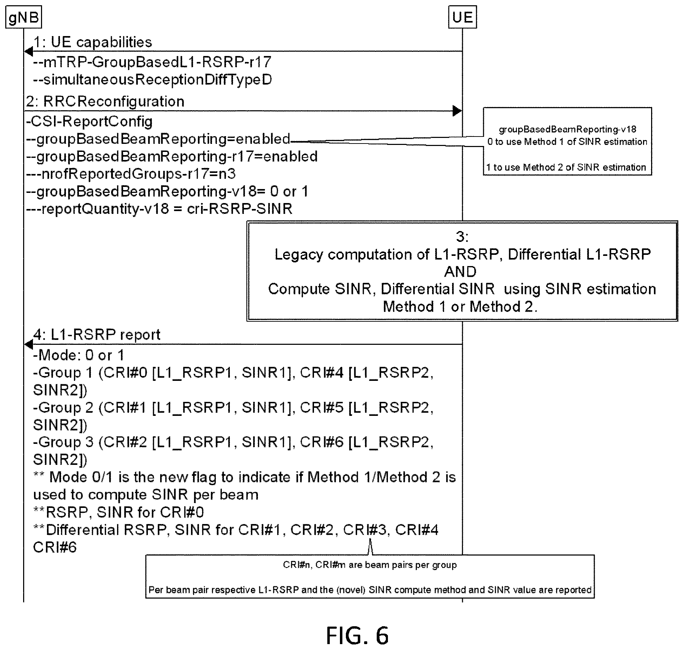

Referring also to FIG. 6, one example embodiment of a signaling diagram between the UE and a network equipment (gNB in this case) is shown. The steps may include:

➢ In Step 1 the UE shares the capabilities to the gNB. The group-based reporting is optional with capability signaling indicated by mTRP-GroupBasedL1-RSRP-r17.

➢ In Step 2 the gNB configures the CSI-ReportConfig, which indicates that group-based beam reporting by enabling groupBasedBeamReporting-r17 and configuring nrofReportedGroups-r17. In this example the number of reported groups is 3. groupBasedBeamReporting-r18, reportQuantity-r18 are the new configuration parameters to respectively configure to the UE, SINR computation method, and the RSRP plus SINR report quantity per beam pair in each beam group.

➢ In Step 3, UE computes SINR per beam using either Method 1 (Mode 1) or Method 2 (Mode 2) based on its receiver capability.

1. **Method 1:** UE will estimate an SINR separately per Rx chain considering interference from all sources based on

a. Differential/ratio of signal power of TRP1 1n Rx Chain 1 to interference power **including the interference signal from TRP2 on Rx Chain 1,**
and

b. Differential/ratio of signal power of TRP2 on Rx Chain 2 to interference power **including the interference signal of TRP1 on Rx Chain 2.**

2. **Method 2:** UE will estimate an SINR separately per Rx chain excluding inter-TRP interference as:

a. Differential/ratio of signal power of TRP1 1n Rx Chain 1 to interference power **excluding the interference signal from TRP2 on Rx Chain 1,**
and

b. Differential/ratio of signal power of TRP2 on Rx Chain 2 to interference power **excluding the interference signal of TRP1 on Rx Chain 2.**

*Note: n = 0,1,2,3 are CSI-RS resource set IDs from TRP1 in the example*
*m = 4,5,6,7 are CSI-RS resource set IDs from TRP2 in the example*

➢ In Step 4, the UE prepares to report the L1-RSRP for the number of reported RS groups as configured by the network. The group-based beam report will contain two new fields to CSI-RS report to include SINR reporting along with the L1-RSRP reports in the same reporting instance.

- **SINR_Mode:**

  ◦ '0' to indicate separate SINR estimation per Rx chain and reporting **including** inter-TRP interference

  ◦ '1' to indicate separate SINR estimation per Rx chain and reporting **excluding** inter-TRP interference

- **SINR** - SINR estimate according to SINR_Mode for the beam with the strongest L1-RSRP. Data format of SINR same as for L1-RSRP.

- **Differential SINR** - Differential value of SINR estimate for other beams in the reported beam groups. Data format of Differential SINR same as data format of Differential L1-RSRP.

The UE then reports the SINR1 and SINR2 as a pair in the group-based Beam Report along with the L1-RSRP1 and L1-RSRP2 beam pairs for TRP1 and TRP2 respectively, in the same reporting instance.

Features may include:

1. Network configures the UE in **CSI-ReportConfig,**

○ **groupBasedBeamReporting-v18** with SINR_Mode indicating usage of Method 1 (Mode 1) or Method 2 (Mode 2) for inter-TRP SINR estimation.

○ **reportQuantity-v18** with cri-RSRP-SINR-Index or ssb-RSRP-SINR-Index for each CMR set associated with a TRP. This will indicate to the UE to report L1-RSRP and estimated inter-TRP SINR per beam in reported beam pair in the same reporting instance.

2. UE receiver capability to,

○ Perform SINR estimation **including the inter-TRP interference** across its receiver chains. → Method 1 (Mode 1)
**OR**

○ Perform SINR estimation **excluding the inter-TRP interference** across its receiver chains. → Method 2 (Mode 2)

3. UE prepares the group-based beam report instance with both L1-RSRP and SINR values that are computed from Step 2 above.

4. UE sends group-based beam report with,

○ **SINR_Mode:** A flag that indicates Mode 1 or Mode 2was used to estimate the reported SINR per beam pair.

○ **SINR:** Estimated SINR (using Mode 1 or Mode 2 as applicable) for each beam in at least one reporting beam pair; such as a single reporting pair with the strongest L1-RSRP for example. In one example method, for the beams other than the one associated with the strongest L1-RSRP (the reporting beam pair), a differential SINR value (see "Differential SINR" below) may be sent for those other beams.

○ **Differential SINR** - Differential value of SINR estimate for other beams in the reported beam groups. Data format of differential SINR may be the same as data format of differential L1-RSRP.

**Mapping to 3GPP specification**

Currently there are no RAN4 enhancements to SINR reporting using group-based beam reporting R-17 framework.

For 3GPP TS 38.331:

Define new configuration parameters in **CSI-ReportConfig**

- **groupBasedBeamReporting-v18** - This parameter defines the Mode (Mode 1 or Mode 2) of SINR computation. For setting this parameter, groupBasedBeamReporting-v1710 must be configured as a pre-requisite.

- **reportQuantity-r18** - This parameter configures the CSI-Report quantity to include L1-RSRP and SINR. The mode of SINR computation ( Mode 1 or Mode 2 ) will decide the SINR to be reported. groupBasedBeamReporting-v18 must be configured for this as a pre-requisite.

```
-- ASN1START
-- TAG-CSI-REPORTCONFIG-START


CSI-ReportConfig ::=            SEQUENCE {
    reportConfigId                  CSI-ReportConfigId,
    carrier                      ServCellIndex              OPTIONAL,   -- Need S
    resourcesForChannelMeasurement        CSI-ResourceConfigId,
    csi-IM-ResourcesForInterference      CSI-ResourceConfigId       OPTIONAL,
-- Need R
    nzp-CSI-RS-ResourcesForInterference                CSI-ResourceConfigId
OPTIONAL,   -- Need R
    reportConfigType                  CHOICE {
        periodic                  SEQUENCE {
            reportSlotConfig              CSI-ReportPeriodicityAndOffset,
            pucch-CSI-ResourceList            SEQUENCE (SIZE (1..maxNrofBWPs))
OF PUCCH-CSI-Resource
        },
        semiPersistentOnPUCCH              SEQUENCE {
            reportSlotConfig              CSI-ReportPeriodicityAndOffset,
            pucch-CSI-ResourceList            SEQUENCE (SIZE (1..maxNrofBWPs))
OF PUCCH-CSI-Resource
        },
        semiPersistentOnPUSCH              SEQUENCE {
            reportSlotConfig              ENUMERATED {sl5, sl10, sl20, sl40, sl80,
sl160, sl320},
            reportSlotOffsetList              SEQUENCE (SIZE (1.. maxNrofUL-
Allocations)) OF INTEGER(0..32),
            p0alpha              P0-PUSCH-AlphaSetId
        },
        aperiodic                  SEQUENCE {
            reportSlotOffsetList              SEQUENCE (SIZE (1..maxNrofUL-
Allocations)) OF INTEGER(0..32)
        }
    },
```

```
reportQuantity                  CHOICE {
    none                        NULL,
    cri-RI-PMI-CQI                  NULL,
    cri-RI-i1                   NULL,
    cri-RI-i1-CQI                   SEQUENCE {
        pdsch-BundleSizeForCSI                  ENUMERATED  {n2, n4}
OPTIONAL   -- Need S
    },
    cri-RI-CQI                  NULL,
    cri-RSRP                    NULL,
    ssb-Index-RSRP                  NULL,
    cri-RI-LI-PMI-CQI               NULL
},

.......
groupBasedBeamReporting             CHOICE {
    enabled                     NULL,
    disabled                    SEQUENCE {
        nrofReportedRS                  ENUMERATED {n1, n2, n3, n4}
OPTIONAL    -- Need S
    }
},

......
reportQuantity-r16          CHOICE {
    cri-SINR-r16                NULL,
    ssb-Index-SINR-r16              NULL
}                                                       OPTIONAL,
-- Need R

.....
groupBasedBeamReporting-v1710       SEQUENCE {
    nrofReportedGroups-r17          ENUMERATED {n1, n2, n3, n4}
}                                                       OPTIONAL,
-- Need R

.....
reportQuantity-r17              CHOICE {
    cri-RSRP-Index-r17              NULL,
    ssb-Index-RSRP-Index-r17        NULL,
    cri-SINR-Index-r17              NULL,
    ssb-Index-SINR-Index-r17        NULL
}                                                       OPTIONAL
-- Need R


groupBasedBeamReporting-v18     SEQUENCE {
    SINR_Mode                   ENUMERATED {0,1}
}                                                       OPTIONAL,
-- Need R


reportQuantity-r18              CHOICE {
    cri-RSRP-SINR-Index-r17             NULL,
```

```
            ssb-Index-RSRP-SINR-Index-r17      NULL,
        }                                                        OPTIONAL,
    -- Need R
        ]]


    }


        ....


        -- TAG-CSI-REPORTCONFIG-STOP
            -- ASN1STOP
```

For 3GPP TS 38.212, Section 6.3.1:
Define new fields in **CSI Report which is part of group-based beam reporting**

  ∘ **SINR_Mode:** A flag that indicates Method 1 (Mode 1) or Method 2 (Mode 2) was used to estimate the reported SINR per beam pair.

  ∘ **SINR:** Estimated SINR (using Method 1 (Mode 1) or Method 2 (Mode 2) as applicable) for each Rx beam associated with each TRP in beam pair.

  ∘ **Differential SINR** - Differential value of SINR estimate for other beams in the reported beam groups. Data format of Differential SINR same as data format of Differential L1-RSRP.

One advantage of defining the SINR as described below, is that the RSRP report and SINR report are reported for the same groups. If separate reports would be used for RSRP and SINR, the choice of RS pairs for RSRP and SINR could be potentially different for both reports, and for this reason the information that would be delivered for the network would not be sufficient to decide the best group for scheduling the UE for simultaneous reception. Additionally, since the report is done jointly, it is implicit that the UE should be using the same spatial filters for the RSRP and SINR report. In the case of separate SINR and RSRP reports the UE could potentially choose a special filter that either maximizes SINR or RSRP, but this is avoided by making the joint reporting.

SINR_mode is defined in the proposed CSI-RS report (sent as part of group-based beam reporting). The reason for UE to report this is to implicitly indicate how the SINR estimation was performed for the reported beam pairs. The network mandates or recommends using a certain method (Mode 1 or Mode 2) to perform the SINR estimation, however the UE may decide to use the most optimum method (for example based on its receiver capability).

The bitwidth for CRI, SSBRI, RSRP, differential RSRP, and Capability Index are provided in Table 6.3.1.1.2-6 and may be modified as follows:

**Table 6.3.1.1.2-6: CRI, SSBRI, RSRP, and CapabilityIndex**

| Field | Bitwidth |
|---|---|
| CRI | $\left\lceil \log_2\left(K_s^{\mathrm{CSI-RS}}\right)\right\rceil$ |
| SSBRI | $\left\lceil \log_2\left(K_s^{\mathrm{SSB}}\right)\right\rceil$ |
| RSRP | 7 |
| Differential RSRP | 4 |
| CapabilityIndex | 2 |
| **SINR_Mode** | **1** |
| **SINR** | **7** |
| **Differential SINR** | **4** |

where $K_s^{\text{CSI-RS}}$ is the number of CSI-RS resources in the corresponding resource set, and $K_s^{\text{SSB}}$ is the configured number of SS/PBCH blocks in the corresponding resource set for reporting 'ssb-Index-RSRP'.

Table 6.3.1.1.2-8B may be modified as follows:

**Table 6.3.1.1.2-8B: Mapping order of CSI fields of one report for group-based CRI/RSRP or SSBRI/RSRP reporting**

| CSI report number | CSI fields |
|---|---|
| CSI report #n | Resource set indicator |
| | SINR_Mode |
| | CRI or SSBRI #1 of 1st resource group as in Table 6.3.1.1.2-6, if reported |
| | CRI or SSBRI #2 of 1st resource group as in Table 6.3.1.1.2-6, if reported |
| | CRI or SSBRI #1 of 2nd resource group as in Table 6.3.1.1.2-6, if reported |
| | CRI or SSBRI #2 of 2nd resource group as in Table 6.3.1.1.2-6, if reported |
| | CRI or SSBRI #1 of 3rd resource group as in Table 6.3.1.1.2-6, if reported |
| | CRI or SSBRI #2 of 3rd resource group as in Table 6.3.1.1.2-6, if reported |
| | CRI or SSBRI #1 of 4th resource group as in Table 6.3.1.1.2-6, if reported |
| | CRI or SSBRI #2 of 4th resource group as in Table 6.3.1.1.2-6, if reported |
| | RSRP of CRI or SSBRI #1 of 1st resource group as in Table 6.3.1.1.2-6 |
| | Differential RSRP of CRI or SSBRI #2 of 1st resource group as in Table 6.3.1.1.2-6 |
| | Differential RSRP of CRI or SSBRI #1 of 2nd resource group as in Table 6.3.1.1.2-6, if reported |
| | Differential RSRP of CRI or SSBRI #2 of 2nd resource group as in Table 6.3.1.1.2-6, if reported |
| | Differential RSRP of CRI or SSBRI #1 of 3rd resource group as in Table 6.3.1.1.2-6, if reported |
| | Differential RSRP of CRI or SSBRI #2 of 3rd resource group as in Table 6.3.1.1.2-6, if reported |
| | Differential RSRP of CRI or SSBRI #1 of 4th resource group as in Table 6.3.1.1.2-6, if reported |
| | Differential RSRP of CRI or SSBRI #2 of 4th resource group as in Table 6.3.1.1.2-6, if reported |
| | **SINR as a measure of inter-TRP interference of CRI or SSBRI#1 of 1st Resource group as in Table 6.3.1.1.2-6** |
| | **Differential SINR as a measure of inter-TRP interference of CRI or SSBRI#2 of 1st Resource group as in Table 6.3.1.1.2-6** |
| | **Differential SINR of CRI or SSBRI #1 of 2nd resource group as in Table 6.3.1.1.2-6, if reported** |
| | **Differential SINR of CRI or SSBRI #2 of 2nd resource group as in Table 6.3.1.1.2-6, if reported** |
| | **Differential SINR of CRI or SSBRI #1 of 3rd resource group as in Table 6.3.1.1.2-6, if reported** |
| | **Differential SINR of CRI or SSBRI #2 of 3rd resource group as in Table 6.3.1.1.2-6, if reported** |

(continued)

| CSI report number | CSI fields |
| --- | --- |
| | **Differential SINR of CRI or SSBRI #1 of 4th resource group as in Table 6.3.1.1.2-6, if reported** |
| | **Differential SINR of CRI or SSBRI #2 of 4th resource group as in Table 6.3.1.1.2-6, if reported** |

where the 1-bit resource set indicator, with value of 0 or 1, indicates the $1^{st}$ or the $2^{nd}$ channel measurement resource set respectively, from which CRI or SSBRI #1 of $1^{st}$ resource group is reported from; SINR_Mode is a flag that indicates Mode 1 or Mode 2 was used to estimate the reported SINR per beam in beam pair, and all remaining resource groups, if reported, follow the same mapping order as the $1^{st}$ resource group where CRI or SSBRI #1 of all remaining resource groups is reported from the indicated channel measurement resource set. For all reported resource groups, CRI or SSBRI #1 and CRI or SSBRI #2 are reported from different channel measurement resource sets. In regard to the example two ways of determining the SINR, including and excluding inter-TRP interference, please note that "Method 1" is sometimes interchangeably referred to herein as "the first mode" or "Mode 1", and "Method 2" is sometimes interchangeably referred to herein as "the second mode" or "Mode 2". SINR_Mode may be a flag/indication indicating Method 1 (the first mode) or Method 2 (the second mode) for computing the reported SINR per beam pair, Method 1 may means estimating SINR including inter-TRP interference, and Method 2 may means estimating SINR excluding inter-TRP interference, and in one example this may be provided as:

Method 1 = SINR_Mode indicating estimation 1, which estimates SINR including inter-TRP interference;

Method 2 = SINR_Mode indicating estimation 2, which estimates SINR excluding inter-TRP interference.

Features as described herein may comprise determining at least one of SINR, differential SINR, based on a predefined rule of SINR estimations, wherein the SINR estimations are made per beam on at least one of NZP-CSI-RS resources or SSB resources. A method may comprise:

configuring, at a user equipment, a capability of simultaneously receiving downlink (DL) signals from different TCI states QCL-D with reference signals from a plurality of transmission-reception points (TRPs) in channel measurement resource (CMR) sets;

receiving, at a user equipment, at least one of groupBasedBeamReporting or reportQuantity via RRC Reconfiguration message from one of the plurality of TRPs a network entity;

determining at least one of SINR, differential SINR, based on a predefined rule of SINR estimations, wherein the SINR estimations are made per beam on at least one of NZP-CSI-RS resources or SSB resources; and

transmitting L1-RSRP report to the network entity, wherein the L1-RSRP report includes at least one of a flag indicating the predefined rule and a plurality of group-based SINR values to the one of the plurality of TRPs.

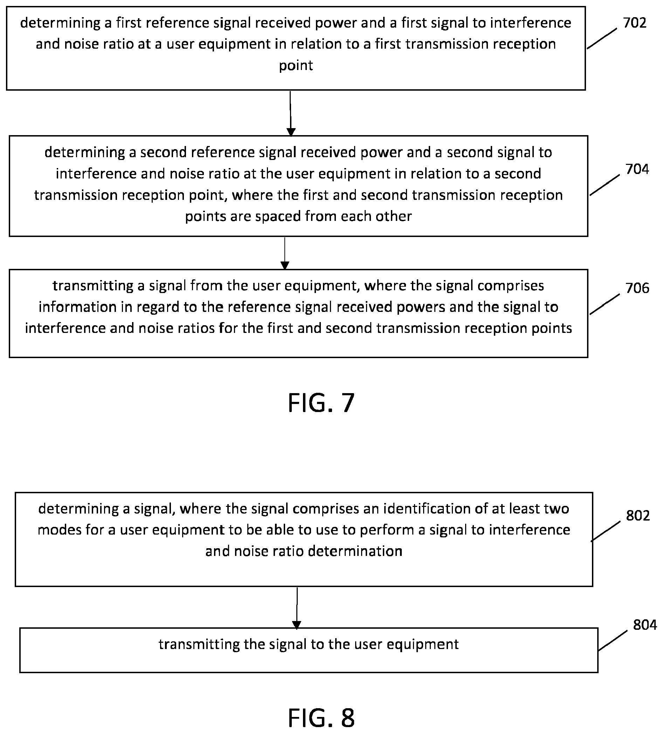

The method may further comprise use of a flag indicating that a "predefined method/rule" is used for SINR estimation. The method may further comprise use of group-based SINR values include at least one of SINR or differential SINR.
Referring also to FIG. 7, an example method may be provided comprising: determining a first reference signal received power and a first signal to interference and noise ratio at a user equipment in relation to a first transmission reception point as indicated by block 702; determining a second reference signal received power and a second signal to interference and noise ratio at the user equipment in relation to a second transmission reception point as indicated by block 704, where the first and second transmission reception points are spaced from each other; and transmitting a signal from the user equipment, where the signal comprises information in regard to the reference signal received powers and the signal to interference and noise ratios for the first and second transmission reception points as indicated by block 706.
The signal may comprise a channel state information signal. The method may further comprise determining a mode, from a plurality of modes for the determining of the first signal to interference and noise ratio and for the determining of the second signal to interference and noise ratio. The determining of the mode may comprise selecting the mode from the plurality of modes. The determining of the mode may comprise using a parameter received at the user equipment from a network equipment to at least partially determine the mode. The method may further comprise receiving a signal from the network equipment, where the signal from the network equipment comprises the parameter in a channel state information reporting configuration. The mode may comprise performing a signal to interference and noise ratio estimation including inter-transmission reception point interference across receiver chains. The performing a signal to interference and noise ratio estimation may comprise estimating the signal to interference and noise ratio separately per receiver chain considering interference from multiple sources based on: a differential or ratio of signal power of the first transmission reception point on a first receiver chain to interference power including an interference signal from the second transmission reception point on the first receiver chain, and a differential or ratio of signal power of the second transmission reception point on the second receiver chain to interference power including an interference signal of the first transmission reception point on the second receiver chain. The mode may comprise performing a signal to interference and noise ratio estimation excluding inter-TRP interference across receiver chains. The mode may comprise estimating the signal to interference and noise ratio separately per receiver chain considering interference from multiple sources based on: a differential or ratio of signal power of the first transmission reception point on a first receiver chain to interference power excluding an interference signal from the second transmission reception point on the first receiver chain, and a differential or ratio of signal power of the second transmission reception point on the second receiver chain to interference power excluding an interference signal of the first transmission reception point on the second receiver chain. The transmitting of the signal from the user equipment may comprise information indicates the determined mode. The method may further comprise determining a strongest reference signal received power, where the transmitting of the signal from the user equipment comprises: the signal to interference and noise ratio for each beam in a reporting beam pair having the strongest reference signal received power, and differential signal to interference and noise ratio values for other beams. The differential signal to interference and noise ratio values and the signal to interference and noise ratio for each beam in the reporting beam pair having the strongest reference signal received power may have a same data format in the transmitting of the signal from the user equipment. A data format of the first reference signal received power reported in the signal may be the same as a data format of the first signal to interference and noise ratio reported in the signal. The signal from the network equipment comprises an indication to perform the method.

An example embodiment may be provided with an apparatus comprising: at least one processor; and at least one non-transitory memory storing instructions that, when executed with the at least one processor, cause the apparatus to perform: determining a first reference signal received power and a first signal to interference and noise ratio at the apparatus in relation to a first transmission reception point; determining a second reference signal received power and a second signal to interference and noise ratio at the apparatus in relation to a second transmission reception point, where the first and second transmission reception points are spaced from each other; and transmitting a signal from the apparatus, where the signal comprises information in regard to the reference signal received powers and the signal to interference and noise ratios for the first and second transmission reception points. The signal may comprise a channel state information signal. The instructions, when executed with the at least one processor, may cause the apparatus to perform determining a mode, from a plurality of modes for the determining of the first signal to interference and noise ratio and for the determining of the second signal to interference and noise ratio. The determining of the mode may comprise selecting the mode from the plurality of modes. The determining of the mode may comprise using a parameter received at the apparatus from a network equipment to at least partially determine the mode. The instructions, when executed with the at least one processor, may cause the apparatus to perform receiving a signal from the network equipment, where the signal from the network equipment comprises the parameter in a channel state information reporting configuration. The mode may comprise performing a signal to interference and noise ratio estimation including inter-transmission reception point interference across receiver chains. The performing a signal to interference and noise ratio estimation may comprise estimating the signal to interference and noise ratio separately per receiver chain considering interference from multiple sources based on: a differential or ratio of signal power of the first transmission reception point on a first receiver chain to interference power including an interference signal from the second transmission reception point on the first receiver chain, and a differential or ratio of signal power of the second transmission reception point on the second receiver chain to interference power including an interference signal of the first transmission reception point on the second receiver chain. The mode may comprise performing a signal to interference and noise ratio estimation excluding inter-TRP interference across receiver chains. The mode may comprise estimating the signal to interference and noise ratio separately per receiver chain considering interference from multiple sources based on: a differential or ratio of signal power of the first transmission reception point on a first receiver chain to interference power excluding an interference signal from the second transmission reception point on the first receiver chain, and a differential or ratio of signal power of the second transmission reception point on the second receiver chain to interference power excluding an interference signal of the first transmission reception point on the second receiver chain. The transmitting of the signal from the apparatus may comprise information indicates the determined mode. The instructions, when executed with the at least one processor, may cause the apparatus to perform determining a strongest reference signal received power, where the transmitting of the signal from the apparatus comprises: the signal to interference and noise ratio for each beam in a reporting beam pair having the strongest reference signal received power, and differential signal to interference and noise ratio values for other beams. The differential signal to interference and noise ratio values and the signal to interference and noise ratio for each beam in the reporting beam pair having the strongest reference signal received power may have a same data format in the transmitting of the signal from the apparatus. A data format of the first reference signal received power reported in the signal may be the same as a data format of the first signal to interference and noise ratio reported in the signal. The instructions, when executed with the at least one processor, may cause the apparatus to perform receiving a signal from a network equipment, where the signal from the network equipment comprises an indication to perform the determining steps.

An example embodiment may be provided with an apparatus comprising: means for determining a first reference signal received power and a first signal to interference and noise ratio at the apparatus in relation to a first transmission reception point; means for determining a second reference signal received power and a second signal to interference and noise ratio at the apparatus in relation to a second transmission reception point, where the first and second transmission reception points are spaced from each other; and means for transmitting a signal from the apparatus, where the signal comprises information in regard to the reference signal received powers and the signal to interference and noise ratios for the first and second transmission reception points.

An example embodiment may be provided with a non-transitory program storage device readable by an apparatus, tangibly embodying a program of instructions executable with the apparatus for performing operations, the operations comprising: determining a first reference signal received power and a first signal to interference and noise ratio at a user equipment in relation to a first transmission reception point; determining a second reference signal received power and a second signal to interference and noise ratio at the user equipment in relation to a second transmission reception point, where the first and second transmission reception points are spaced from each other; and transmitting a signal from the user equipment, where the signal comprises information in regard to the reference signal received powers and the signal to interference and noise ratios for the first and second transmission reception points.

Referring also to FIG. 8, an example method may be provided comprising: determining a signal, where the signal comprises an identification of at least two modes for a user equipment to use to perform a signal to interference and noise ratio determination as indicated by block 802; and transmitting the signal to the user equipment as indicated by block 804.

The signal may comprise channel state information reporting configuration transmitted to the user equipment. The signal may comprise an indication for the user equipment to report: the signal to interference and noise ratio determination, and a reference signal received power for at least one transmission reception point. The signal may comprise an indication for the user equipment to report a mode, of the at least two modes, used by the user equipment to perform a signal to interference and noise ratio determination. The signal may comprise an indication for the user equipment to report: the signal to interference and noise ratio determination regarding a first transmission reception point, and at least one differential signal to interference and noise ratio determination regarding at least one second transmission reception point. The method may further comprise: receiving a signal from the user equipment, where the signal comprises an indication of a mode used to determine signal to interference and noise ratios for multiple transmission reception points; and using the indication to at least partially determine beam management and scheduling decisions for subsequent simultaneous reception at the user equipment. The signal received from the user equipment may comprise a determined signal to interference and noise ratio regarding at least a first one of the multiple transmission reception points. The signal received from the user equipment may comprise the determined signal to interference and noise ratio for each beam in a reporting beam pair regarding the first transmission reception point. The signal received from the user equipment may comprise information regarding a differential signal to interference and noise ratio value regarding at least a second one of the multiple transmission reception points. The signal received from the user equipment may comprise information regarding a reference signal received power regarding at least a first one of the multiple transmission reception points. The signal received from the user equipment may comprise information regarding a differential reference signal received power regarding at least a second one of the multiple transmission reception points. The information regarding a differential reference signal received power and the information regarding the information regarding a differential signal to interference and noise ratio value may comprise a common data format.

An example embodiment may be provided with an apparatus comprising: at least one processor; and at least one non-transitory memory storing instructions that, when executed with the at least one processor, cause the apparatus to perform: determining a signal, where the signal comprises an identification of at least two modes for a user equipment to use to perform a signal to interference and noise ratio determination; and transmitting the signal to the user equipment. The signal may comprise channel state information reporting configuration transmitted to the user equipment. The signal may comprise an indication for the user equipment to report: the signal to interference and noise ratio determination, and a reference signal received power for at least one transmission reception point. The signal may comprise an indication for the user equipment to report a mode, of the at least two modes, used by the user equipment to perform a signal to interference and noise ratio determination. The signal may comprise an indication for the user equipment to report: the signal to interference and noise ratio determination regarding a first transmission reception point, and at least one differential signal to interference and noise ratio determination regarding at least one second transmission reception point. The instructions, when executed with the at least one processor, may be configured to cause the apparatus to perform: receiving a signal from the user equipment, where the signal comprises an indication of a mode used to determine signal to interference and noise ratios for multiple transmission reception points; and using the indication to at least partially determine beam management and scheduling decisions for subsequent simultaneous reception at the user equipment. The signal received from the user equipment may comprise a determined signal to interference and noise ratio regarding at least a first one of the multiple transmission reception points. The signal received from the user equipment may comprise the determined signal to interference and noise ratio for each beam in a reporting beam pair regarding the first transmission reception point. The signal received from the user equipment may comprise information regarding a differential signal to interference and noise ratio value regarding at least a second one of the multiple transmission reception points. The signal received from the user equipment may comprise information regarding a reference signal received power regarding at least a first one of the multiple transmission reception points. The signal received from the user equipment may comprise information regarding a differential reference signal received power regarding at least a second one of the multiple transmission reception points. The information regarding a differential reference signal received power and the information regarding the information regarding a differential signal to interference and noise ratio value may comprise a common data format.

An example embodiment may be provided with an apparatus comprising: means for determining a signal, where the signal comprises an identification of at least two modes for a user equipment to use to perform a signal to interference and noise ratio determination; and means for transmitting the signal to the user equipment.

An example embodiment may be provided with a non-transitory program storage device readable by an apparatus, tangibly embodying a program of instructions executable with the apparatus for performing operations, the operations comprising: determining a signal, where the signal comprises an identification of at least two modes for a user equipment to use to perform a signal to interference and noise ratio determination; and transmitting the signal to the user equipment.

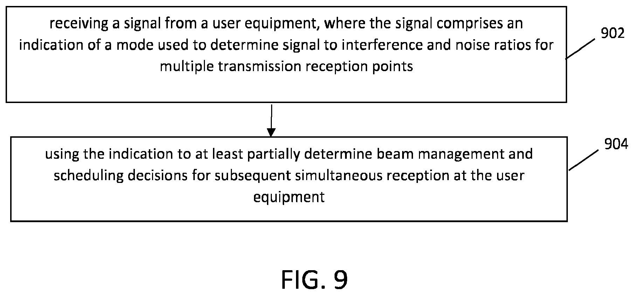

Referring also to FIG. 9, an example method may be provided comprising: receiving a signal from a user equipment as indicated by block 902, where the signal comprises an indication of a mode used to determine signal to interference and noise ratios for multiple transmission reception points; and using the indication to at least partially determine beam management and scheduling decisions for subsequent simultaneous reception at the user equipment as indicated by block 904.

The signal received from the user equipment may comprise a determined signal to interference and noise ratio regarding at least a first one of the multiple transmission reception points. The signal received from the user equipment may comprise the determined signal to interference and noise ratio for each beam in a reporting beam pair regarding the first transmission reception point. The signal received from the user equipment may comprise information regarding a differential signal to interference and noise ratio value regarding at least a second one of the multiple transmission reception points. The signal received from the user equipment may comprise information regarding a reference signal received power regarding at least a first one of the multiple transmission reception points. The signal received from the user equipment may comprise information regarding a differential reference signal received power regarding at least a second one of the multiple transmission reception points. The information regarding a differential reference signal received power and the information regarding the information regarding a differential signal to interference and noise ratio value may comprise a common data format. The method may further comprise: determining a configuration signal, where the configuration signal comprises an identification of at least two modes for the user equipment to use in order to perform the determination of the signal to interference and noise ratios; and transmitting the configuration signal to the user equipment.

An example embodiment may be provided with an apparatus comprising: at least one processor; and at least one non-transitory memory storing instructions that, when executed with the at least one processor, cause the apparatus to perform: receiving a signal from a user equipment, where the signal comprises an indication of a mode used to determine signal to interference and noise ratios for multiple transmission reception points; and using the indication to at least partially determine beam management and scheduling decisions for subsequent simultaneous reception at the user equipment. The signal received from the user equipment may comprise a determined signal to interference and noise ratio regarding at least a first one of the multiple transmission reception points. The signal received from the user equipment may comprise the determined signal to interference and noise ratio for each beam in a reporting beam pair regarding the first transmission reception point. The signal received from the user equipment may comprise information regarding a differential signal to interference and noise ratio value regarding at least a second one of the multiple transmission reception points. The signal received from the user equipment may comprise information regarding a reference signal received power regarding at least a first one of the multiple transmission reception points. The signal received from the user equipment may comprise information regarding a differential reference signal received power regarding at least a second one of the multiple transmission reception points. The information regarding a differential reference signal received power and the information regarding the information regarding a differential signal to interference and noise ratio value may comprise a common data format. The instructions, when executed with the at least one processor, may be configured to cause the apparatus to perform: determining a configuration signal, where the configuration signal comprises an identification of at least two modes for the user equipment to use in order to perform the determination of the signal to interference and noise ratios; and transmitting the configuration signal to the user equipment.

An example embodiment may be provided with an apparatus comprising: means for receiving a signal from a user equipment, where the signal comprises an indication of a mode used to determine signal to interference and noise ratios for multiple transmission reception points; and means for using the indication to at least partially determine beam management and scheduling decisions for subsequent simultaneous reception at the user equipment.

An example embodiment may be provided with a non-transitory program storage device readable by an apparatus, tangibly embodying a program of instructions executable with the apparatus for performing operations, the operations comprising: receiving a signal from a user equipment, where the signal comprises an indication of a mode used to determine signal to interference and noise ratios for multiple transmission reception points; and using the indication to at least partially determine beam management and scheduling decisions for subsequent simultaneous reception at the user equipment.

The term "non-transitory," as used herein, is a limitation of the medium itself (i.e., tangible, not a signal) as opposed to a limitation on data storage persistency (e.g., RAM vs. ROM).

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(iii) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modifications and variances which fall within the scope of the appended claims.

**Claims**

1. An apparatus comprising:

   means for determining a first reference signal received power and a first signal to interference and noise ratio at the apparatus in relation to a first transmission reception point;
   means for determining a second reference signal received power and a second signal to interference and noise ratio at the apparatus in relation to a second transmission reception point, where the first and second transmission reception points are spaced from each other;
   means for transmitting a signal from the apparatus, where the signal comprises information in regard to the reference signal received powers and the signal to interference and noise ratios for the first and second transmission reception points.

**2.** The apparatus as claimed in claim 1, where the signal comprises a channel state information signal.

**3.** The apparatus as claimed in any one of claims 1-2, further comprising means for determining a mode, from a plurality of modes for the determining of the first signal to interference and noise ratio and for the determining of the second signal to interference and noise ratio.

**4.** The apparatus as claimed in claim 3, where the means for determining the mode comprising means for selecting the mode from the plurality of modes.

**5.** The apparatus as claimed in any one of claims 3-4, where the means for determining the mode comprising means for using a parameter received at the apparatus from a network equipment to at least partially determine the mode.

**6.** The apparatus as claimed in claim 5, further comprising means for receiving a signal from the network equipment, where the signal from the network equipment comprises the parameter in a channel state information reporting configuration.

**7.** The apparatus as claimed in any one of claims 3-6, where the mode comprises performing a signal to interference and noise ratio estimation including inter-transmission reception point, inter-TRP, interference across receiver chains.

**8.** The apparatus as claimed in claim 7, where the performing a signal to interference and noise ratio estimation comprises estimating the signal to interference and noise ratio separately per receiver chain considering interference from multiple sources based on:

a differential or ratio of signal power of the first transmission reception point on a first receiver chain to interference power including an interference signal from the second transmission reception point on the first receiver chain, and

a differential or ratio of signal power of the second transmission reception point on the second receiver chain to interference power including an interference signal of the first transmission reception point on the second receiver chain.

**9.** The apparatus as claimed in any one of claims 3-6, where the mode comprises performing a signal to interference and noise ratio estimation excluding inter-transmission reception point, inter-TRP, interference across receiver chains.

**10.** The apparatus as claimed in claim 9, where the mode comprises estimating the signal to interference and noise ratio separately per receiver chain considering interference from multiple sources based on:

a differential or ratio of signal power of the first transmission reception point on a first receiver chain to interference power excluding an interference signal from the second transmission reception point on the first receiver chain, and

a differential or ratio of signal power of the second transmission reception point on the second receiver chain to interference power excluding an interference signal of the first transmission reception point on the second receiver chain.

**11.** The apparatus as claimed in any one of claims 3-10, where the signal transmitted from the apparatus comprises information indicates the determined mode.

**12.** The apparatus as claimed in any one of claims 1-11, further comprising means for determining a strongest reference signal received power, where the transmitting of the signal from the apparatus comprises:

the signal to interference and noise ratio for each beam in a reporting beam pair having the strongest reference signal received power, and

differential signal to interference and noise ratio values for other beams.

**13.** The apparatus as claimed in claim 12, where the differential signal to interference and noise ratio values and the signal to interference and noise ratio for each beam in the reporting beam pair having the strongest reference signal received power have a same data format in the transmitting of the signal from the apparatus.

**14.** A method comprising:

determining a first reference signal received power and a first signal to interference and noise ratio at a user equipment in relation to a first transmission reception point;

determining a second reference signal received power and a second signal to interference and noise ratio at the user equipment in relation to a second transmission reception point, where the first and second transmission reception points are spaced from each other;

transmitting a signal from the user equipment, where the signal comprises information in regard to the reference signal received powers and the signal to interference and noise ratios for the first and second transmission reception points.

**15.** An apparatus comprising:

means for determining a signal, where the signal comprises an identification of at least two modes for a user equipment to use to perform a signal to interference and noise ratio determination; and

means for transmitting the signal to the user equipment.

FIG. 1

EP 4 472 091 A1

# 2 layers per TRP

TRP1
Data symbol:
S1 mapped on H
S2 mapped on V
S1  S2

H/V

Delta AoA

h11, h21,
h12, h22

TRP2
Data symbol:
S3 mapped on H
S4 mapped on V

H/V

S3  S4

Panel

Rx-Chain1

110

h31, h41,
h32, h42

Signals received at RX chain 1

## FIG. 2

Signals received at RX chain 2

FIG. 3

TRP1
PCI-1

CRI#0
CRI#1
CRI#2
CRI#3

CRI#4
CRI#5
CRI#6
CRI#7

TRP2
PCI-1/PCI-2

Multi-RX, Multi-panel FR2 UE    110

## FIG. 4

gNB

UE

1: UE capabilities

--mTRP-GroupBasedL1-RSRP-r17
--simultaneousReceptionDiffTypeD

2: RRCReconfiguration

-CSI-ReportConfig
--groupBasedBeamReporting=enabled
--groupBasedBeamReporting-r17=enabled
---nrofReportedGroups-r17=n3
---reportQuantity = cri-RSRP

3: L1-RSRP report

-Group 1 (CRI#0, CRI#4)
-Group 2 (CRI#1, CRI#5)
-Group 3 (CRI#2, CRI#6)

All 3 reporting groups from CMR set corresponding to TRP1,2 are reported
** RSRP for CRI#0

** Differential RSRP for CRI#1 to CRI#5

## FIG. 5

| gNB | | UE |
|---|---|---|

**1: UE capabilities**
--mTRP-GroupBasedL1-RSRP-r17
--simultaneousReceptionDiffTypeD

**2: RRCReconfiguration**
-CSI-ReportConfig
--groupBasedBeamReporting=enabled
--groupBasedBeamReporting-r17=enabled
---nrofReportedGroups-r17=n3
--groupBasedBeamReporting-v18= 0 or 1
---reportQuantity-v18 = cri-RSRP-SINR

groupBasedBeamReporting-v18
0 to use Method 1 of SINR estimation

1 to use Method 2 of SINR estimation

**3:**
Legacy computation of L1-RSRP, Differential L1-RSRP
AND
Compute SINR, Differential SINR using SINR estimation
Method 1 or Method 2.

**4: L1-RSRP report**
-Mode: 0 or 1
-Group 1 (CRI#0 [L1_RSRP1, SINR1], CRI#4 [L1_RSRP2, SINR2])
-Group 2 (CRI#1 [L1_RSRP1, SINR1], CRI#5 [L1_RSRP2, SINR2])
-Group 3 (CRI#2 [L1_RSRP1, SINR1], CRI#6 [L1_RSRP2, SINR2])
** Mode 0/1 is the new flag to indicate if Method 1/Method 2 is used to compute SINR per beam
**RSRP, SINR for CRI#0
**Differential RSRP, SINR for CRI#1, CRI#2, CRI#3, CRI#4 CRI#6

CRI#n, CRI#m are beam pairs per group

Per beam pair respective L1-RSRP and the (novel) SINR compute method and SINR value are reported

## FIG. 6

determining a first reference signal received power and a first signal to interference and noise ratio at a user equipment in relation to a first transmission reception point — 702

determining a second reference signal received power and a second signal to interference and noise ratio at the user equipment in relation to a second transmission reception point, where the first and second transmission reception points are spaced from each other — 704

transmitting a signal from the user equipment, where the signal comprises information in regard to the reference signal received powers and the signal to interference and noise ratios for the first and second transmission reception points — 706

## FIG. 7

determining a signal, where the signal comprises an identification of at least two modes for a user equipment to be able to use to perform a signal to interference and noise ratio determination — 802

transmitting the signal to the user equipment — 804

## FIG. 8

receiving a signal from a user equipment, where the signal comprises an indication of a mode used to determine signal to interference and noise ratios for multiple transmission reception points — 902

using the indication to at least partially determine beam management and scheduling decisions for subsequent simultaneous reception at the user equipment — 904

## FIG. 9

Europäisches
Patentamt

European
Patent Office

Office européen
des brevets

# EUROPEAN SEARCH REPORT

Application Number

EP 24 17 1565

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/044697 A1 (APPLE INC [US]; ZHANG YUSHU [CN]) 30 March 2023 (2023-03-30) | 1-11,14, 15 | INV. H04B7/024 H04B17/345 H04B7/06 H04B7/08 |
| Y | * paragraph [0049] - paragraph [0059]; figure 2 * <br> * paragraph [0102] * | 12,13 | |
| Y | WO 2022/021216 A1 (LENOVO BEIJING LTD [CN]) 3 February 2022 (2022-02-03) <br> * paragraph [0111]; table 1 * | 12,13 | |
| A | KARSTEN PETERSEN ET AL: "On MultiRx Demodulation performance and CSI requirements", <br> 3GPP DRAFT; R4-2300701; TYPE DISCUSSION; NR_FR2_MULTIRX_DL-PERF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , <br> vol. RAN WG4, no. Athens, GR; 20230227 - 20230303 <br> 17 February 2023 (2023-02-17), XP052241572, <br> Retrieved from the Internet: <br> URL:https://www.3gpp.org/ftp/TSG_RAN/WG4_R adio/TSGR4_106/Docs/R4-2300701.zip <br> [retrieved on 2023-02-17] <br> * page 4 - page 7 * | 1-15 | TECHNICAL FIELDS SEARCHED (IPC) <br><br> H04B |

The present search report has been drawn up for all claims

| Place of search | Date of completion of the search | Examiner |
|---|---|---|
| Munich | 15 October 2024 | Oana, Andrei |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                          

& : member of the same patent family, corresponding
document

EPO FORM 1503 03.82 (P04C01)

Europäisches
Patentamt

European
Patent Office

Office européen
des brevets

**Application Number**

EP 24 17 1565

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

36

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

     1. claims: 1-15

          Measuring and reporting RSRP and SINR for two TRPs.

    1.1. claim: 15

          Sending an indication to a UE about at least two modes to use by the UE to perform a SINR determination.
                                 - - -

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 24 17 1565

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2024

| Patent document cited in search report | Publication date | Patent family member(s) | | Publication date |
|---|---|---|---|---|
| WO 2023044697 A1 | 30-03-2023 | CN | 116171588 A | 26-05-2023 |
| | | EP | 4406275 A1 | 31-07-2024 |
| | | US | 2024196247 A1 | 13-06-2024 |
| | | WO | 2023044697 A1 | 30-03-2023 |
| WO 2022021216 A1 | 03-02-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3GPP TSG-RAN4 WG4 meeting #106-bis-e WF on NR FR2 multi-Rx chain DL reception RRM requirements (part 2). *R4- 2306319*